# EUROPÄISCHE PATENTSCHRIFT

(11) **EP 2 083 209 B1**
(45) Veröffentlichungstag und Bekanntmachung des Hinweises auf die Patenterteilung: **17.10.2012**
(21) Anmeldenummer: 08101007.6
(22) Anmeldetag: 28.01.2008
(51) Int. Cl.: F16P 3/14, G05B 19/042, G05B 19/4061, G06T 7/20, G01P 3/68, G01P 3/80, G01P 21/02, G01S 11/12, G01S 17/50, G01S 17/58, G01D 3/08, B25J 19/06

(54) **Sicherheitssystem zur berührungslosen Messung von Wegen und/oder Geschwindigkeiten**
Security system for contactless measurement of paths and/or speeds
Système de sécurité destiné à la mesure sans contact de voies et/ou de vitesses

(43) Veröffentlichungstag der Anmeldung: 29.07.2009
(73) Patentinhaber: SICK AG, 79183 Waldkirch (DE)
(72) Erfinder: Wüstefeld, Martin, 79350, Sexau (DE)
(74) Vertreter: Hehl, Ulrich

(56) Entgegenhaltungen:
- EP-A- 1 837 586
- DE-A1- 10 226 950
- DE-A1- 10 245 720
- US-B1- 6 297 844

## Beschreibung

Die Erfindung betrifft einen optoelektronischen Sicherheitssensor und ein Sicherheitsverfahren zur optischen berührungslosen Messung von Wegen und/oder Geschwindigkeiten nach dem Oberbegriff von Anspruch 1 beziehungsweise 12.

In der Sicherheitstechnik wurden verschiedene berührungslos wirkende optoelektronische Sensoren etabliert, um Bedienpersonal vor Unfällen an den von ihnen bedienten Maschinen oder vor sonstigen Gefahrenquellen in ihrer Umgebung zu schützen. Keiner dieser sicheren optoelektronischen Sensoren wie Lichtgitter, Lichtschranken oder Scanner ist in der Lage, direkt den Weg oder die Geschwindigkeit eines Objekts zu ermitteln. Bekannte Verfahren zur Ermittlung von Weg oder Geschwindigkeit erfüllen nicht die verlangten definierten Sicherheitskategorien für sicherheitstechnische Applikationen. Wird ein sicheres Signal zu Geschwindigkeitsbestimmung oder zur Aufzeichnung des Weges benötigt, so geschieht dies über indirekte Methoden, beispielsweise über Drehgeber, welche auf der Antriebswelle die Geschwindigkeiten bestimmen.

Bei einem herkömmlichen Verfahren zur berührungslosen optischen Messung von Wegen und Geschwindigkeiten mittels optischer Korrelation wird mit einem pixelaufgelösten Lichtempfänger die Oberfläche eines Referenzobjekts aufgenommen, bezüglich dessen eine Relativbewegung gemessen werden soll. Dem Lichtempfänger ist ein Gitter vorgeschaltet, welches als Ortsfrequenzfilter wirkt. Mit dessen Hilfe können Strukturen der Oberfläche in verschiedenen Aufnahmen des Lichtempfängers wiedererkannt und aus deren Verschiebung Wege und Geschwindigkeiten berechnet werden. Solche Verfahren sind in der DE 44 09 241 C2, der DE 4444 223 C5 oder der EP 1 047 918 B1 beschrieben. Es ist auch bekannt, mehrere Aufnahmen des Licht empfängers ohne zwischengeschaltetes Gitter miteinander zu korrelieren. Eine weitere Alternative zur Auswertung beruht auf der Schätzung des optischen Flusses, dessen zeitliche Variation eine Komponente enthält, welche durch Relativbewegungen bestimmt ist und daher Rückschlüsse auf Weg und Geschwindigkeit ermöglicht. Keines dieser Verfahren ist aber für sich zuverlässig genug, um in der Sicherheitstechnik eingesetzt zu werden.

Heutige sichere Sensoren, wie etwa horizontal liegende Lichtgitter oder Scanner, welche sich an Referenzpunkten oder Referenzflächen orientieren und somit hohe und flexible Anforderungen an die Montage stellen, können einen Weg oder eine Geschwindigkeit trotz dieses Aufwandes nur durch nachgeschaltete Signalverarbeitung und in eingeschränktem Rahmen ermitteln. Indirekte Methoden, etwa über Drehgeber, bergen immer die Gefahr in sich, dass nicht der tatsächlich zurückgelegten Weg und in Folge eine falsche Geschwindigkeit ermittelt wird. Ursache können Schlupf oder mechanische Schäden in den weiteren Antriebskomponenten sein, etwa falsche Annahmen über den Reifendurchmesser wegen variierendem Reifendruck.

Mit 3D-Überwachungskameras, wie sie etwa aus der US 6,297,844 B1 bekannt sind, kann zwar prinzipiell Weg und Geschwindigkeit eines Objekts durch aufwändige Bildverarbeitung festgestellt werden. Sofern dabei die Wiedererkennung des Objekts über seine Trajektorie überhaupt gelingt, sind diese Auswertungen mit heutiger Technik noch nicht sicher zu erreichen und würden Leben und Gesundheit von Bedienpersonal gefährden. Im Übrigen ist der apparative Aufwand für eine 3D-Kamera und deren aufwändige Auswertungseinheiten bei weitem zu hoch für einen praxistauglichen Sicherheitssensor, der lediglich Weg und Geschwindigkeit bestimmen soll.

Aus der DE 102 45 720 A1 ist ein weiteres stereoskopisches Kamerasystem zum Absichern eines Gefahrenbereichs bekannt. Dabei werden die beiden Einzelbilder einem konturbasierten und einem korrelationsbasierten Stereoverfahren unterzogen. In einer Ausführungsform werden die Schutzzonen an Parameter wie Form, Bewegungsrichtung und Bewegungsgeschwindigkeit eines Fremdobjekts angepasst.

Die EP 1 837 586 A2 beschreibt eine Vorrichtung zur Überwachung eines Gefahrenbereichs an einem Arbeitsmittel. Dabei überwacht eine Kamera eine Schutzzone als Teil eines Gefahrenbereichs. Mit Hilfe eines weiteren Sensors wird ein Muting-Signal generiert, mit dessen Hilfe die Kamera überbrückt werden kann, um bekannte zulässige Objekte von der Schutzfunktion auszunehmen.

Aus der DE 102 26 950 A1 ist eine optische Maus zum Navigieren auf gemaserten Oberflächen bekannt.

Es ist daher Aufgabe der Erfindung, ein System zur berührungslosen Messung von Wegen und/oder Geschwindigkeiten für die Sicherheitstechnik zu schaffen.

Diese Aufgabe wird durch einen Sicherheitssensor nach Anspruch 1 und ein Sicherheitsverfahren nach Anspruch 12 gelöst. Dabei geht die Erfindung von dem Prinzip aus, die Lichtempfangsdaten für eine optische Korrelation oder die Schätzung des optischen Flusses laufend zu überprüfen und sofort selbständig zu erkennen, wenn keine zuverlässige Weg- oder Geschwindigkeitsbestimmung möglich ist. Ist das der Fall, wird sofort sicherheitsgerichtet abgeschaltet. Der Begriff "Abschaltung" ist hier und im Folgenden in einem weiten Sinne zu verstehen und bedeutet, dass die Gefahrenquelle abgesichert wird. Dies kann in vielen Fällen durch Abschaltung erreicht werden, es sind aber auch andere Sicherungsmaßnahmen denkbar, wie das Einschwenken einer mechanischen Absicherung oder das Abbremsen eines Fahrzeugs oder eines gefährlichen Maschinenteils.

Die Erfindung hat den Vorteil, dass direkte und somit schlupffreie Weg- und Geschwindigkeitsmessungen in der Sicherheitstechnik ermöglicht werden. Durch die erfindungsgemäß verwendeten optischen Messverfahren entsteht ein flexibler, kostengünstiger Sensor, der eine ganze Reihe von sicherheitstechnischen Applikationen erschließt, welche zuvor optisch gar nicht oder nur mit unverhältnismäßig hohem Aufwand gelöst werden konnten.

Die Bestimmung der Geschwindigkeit aus dem ermittelten Weg ist über eine gemeinsame Zeitbasis möglich. Der ermittelte Weg entspricht der durchgeführten Bewegung. Daher werden die Begriffe Weg, Geschwindigkeit und Bewegung an einigen Stellen synonym verwendet. Der Sensor kann, muss aber nicht in der Lage sein, sowohl ein Weg- als auch ein Geschwindigkeitssignal zu liefern und auszugeben.

In vorteilhafter Weiterbildung ist die Auswertungseinheit dafür ausgebildet, bei der Bewertung der Güte die Abbildung des zweiten Objekts auf ausreichende Struktur zu überprüfen, insbesondere ob eine ausreichende räumliche Intensitätsänderung über die Vielzahl von Lichtempfangselementen vorhanden ist. Ohne ausreichende optische Oberflächenstruktur des zweiten Objekts könnte der Sensor nicht zuverlässig unterscheiden, ob er gegenüber der dann glatten Oberfläche ruht oder sich bewegt. Die fehlende Oberflächenstruktur könnte auch darauf beruhen, dass der Sensor ins Leere schaut, falsch fokussiert ist oder dass die Beleuchtung ausgefallen ist. Somit werden durch die Bewertung der Oberflächenstruktur eine ganze Reihe von Fehlersituationen berücksichtigt, in denen Bedienpersonal durch die sofortige sicherheitsgerichtete Reaktion geschützt ist.

Dabei ist besonders bevorzugt die Auswertungseinheit dafür ausgebildet, für ausreichende Struktur ein Zuverlässigkeitsmaß zu berechnen, welches die Anzahl der Extrema der Intensität, die Ausprägung der Extrema und/oder die Streuung der räumlichen Lage und Verteilung der Extrema berücksichtigt. Die Minima und Maxima der Intensitätsverteilung entstehen durch optische Strukturen der Oberfläche des zweiten Objekts. Sind daher Extrema nicht oder nicht in ausreichender Zahl vorhanden, so ist keine sichere Wegbestimmung zu erwarten. Dasselbe gilt, wenn diese Extrema zu schwach ausgeprägt sind, was sowohl deren räumliche Ausdehnung als auch Amplitude betreffen kann und etwa durch eine Schwellbewertung festgestellt wird. Schließlich kann auch die räumliche Verteilung der Extrema Aufschluss über die Güte der Oberflächenstruktur geben. Liegen diese etwa zu eng beieinander, so könnte die Struktur zu wenig ausgeprägt, nicht repräsentativ oder deren Korrelation zu schwach für eine zuverlässige Erkennung in späteren Abbildungen sein. Allen diesen Maßen ist gemeinsam, dass sie sehr schnell und einfach ausgewertet werden können. Es sind darüber hinaus natürlich weitere aus der Mathematik bekannte Bewertungen der Intensitätsmodulation denkbar.

Vorteilhafterweise ist die Auswertungseinheit dafür ausgebildet, ein maximales Zeitintervall zu definieren, innerhalb dessen die Güte oder Teilkriterien der Güte als nicht ausreichend bewertet werden können, ohne ein Abschalt- oder Abbremssignal auszugeben. Dieses Zeitintervall hängt vor allem von der durch die Sicherheitskategorie vorgegebenen geforderten Ansprechzeit ab. Indem eine mangelhafte Güte für den größtmöglichen, Bedienpersonal nicht gefährdenden Zeitraum noch toleriert wird, werden Stillzeiten und aufwändige Wiedereinschaltphasen so weit als möglich vermieden.

Dem Lichtempfänger ist bevorzugt ein optisches Element vorgeschaltet, welches der Abbildung eine regelmäßige Grundstruktur aufzwingt, insbesondere ein optisches Gitter, und/oder die Auswertungseinheit oder der Lichtempfänger ist dafür ausgebildet, die regelmäßige Grundstruktur virtuell durch Verringerung und/oder Erhöhung des Helligkeitssignals ausgewählter Lichtempfangselemente zu erzeugen und/oder die Auswertungseinheit ist dafür ausgebildet ist, die regelmäßige Grundstruktur als Referenzsignal bei der Bewertung der Struktur des zweiten Objekts zu berücksichtigen. Durch ein solches Gitter wird ein besonderes optisches Auswertungsverfahren ermöglicht, nämlich ein Ortsfrequenzfilterverfahren, welches die optische Korrelation erleichtert. Statt des Gitters, welches ein Zusatzelement darstellt, kann die durch ein Gitter verursachte optische Veränderung auch berechnet und dem Signal elektronisch aufgeprägt werden. Wenn schließlich die Auswertungseinheit in der Lage ist, das Beugungsmuster herauszurechnen, können Auswertungen vorgenommen werden, welche trotz des Gitters einer Situation ohne Gitter entsprechen.

In bevorzugter Weiterbildung ist der Sicherheitsausgang zweikanalig ausgebildet und/oder mindestens eine zweite redundante Auswertungseinheit vorgesehen und/oder es sind mehrere insbesondere unterschiedliche Auswertungsverfahren zur Bestimmung der Güte, des Wegs und/oder der Geschwindigkeit in der Auswertungseinheit oder den Auswertungseinheiten implementiert. Derartige Maßnahmen erhöhen die Sicherheit des Sensors. Werden insbesondere verschiedene Auswertungen implementiert, etwa eine optische Korrelation einerseits und eine Schätzung des optischen Flusses andererseits, so führen selbst systematische Fehler eines einzelnen Auswertungsverfahrens nicht zu Gefährdung von Bedienpersonal, da bei fehlender Übereinstimmung des ermittelten Weges oder der Geschwindigkeit von nur einer Auswertungseinheit oder nur einem Auswertungsverfahren die sicherheitsgerichtete Abschaltung erfolgt.

Das zweite Objekt weist vorteilhafterweise eine verstärkte optische Struktur auf, insbesondere durch grobkörnigen Anstrich, verschiedenfarbige Pigmente und/oder Muster. Dies ist natürlich nur dann sinnvoll, wenn der Sensor in einer definierten Umgebung eingesetzt wird. Durch Verstärkung der optischen Struktur können Situationen vermieden oder zumindest in ihrer Häufigkeit reduziert werden, in denen der Sensor aufgrund eines zu schlechten Empfangsignals keinen Weg und keine Geschwindigkeit bestimmen kann und daher ein Abschaltsignal ausgibt. Dadurch wird die Verfügbarkeit erheblich erhöht.

In vorteilhafter Weiterbildung ist die Auswertungseinheit dafür ausgebildet, aus dem Weg und/oder der Geschwindigkeit mittels einer Anfangsreferenz eine Absolutposition des ersten und/oder des zweiten Objekts zu berechnen, Geschwindigkeit und/oder Absolutposition von erstem und/oder zweitem Objekt zu überwachen und das Abschalt- oder Abbremssignal auszugeben, wenn bestimmte Absolutpositionen erreicht oder bestimmte Geschwindigkeiten oder bestimmte Geschwindigkeiten an bestimmten Absolutposition überschritten werden. Der Sensor ermöglicht auf diese Weise, sichere Absolutpositionen zu bestimmen, wodurch eine Reihe von sicherheitstechnischen Applikationen öffnet werden. Unter anderem wird dadurch ermöglicht, bestimmte Bereiche gänzlich zu meiden, in denen eine Gefährdungssituation entstehen könnte. Weiterhin ist auch möglich, Geschwindigkeitsgrenzen besonders auch in Abhängigkeit von der Absolutposition zu definieren. So können in einer Werkhalle Bereiche sein, in denen das erste Objekt mehr oder weniger frei agieren kann, so dass ihm keine oder nur sehr hohe Geschwindigkeitsgrenzen auferlegt werden müssen, während in anderen Bereichen schon die Überschreitung einer wesentlich geringeren Geschwindigkeit als Gefährdung anzusehen ist. Durch derartige flexible Beschränkungen kann die Arbeitsgeschwindigkeit erhöht werden, ohne dadurch die Sicherheit herabzusetzen.

In verschiedenen vorteilhaften Applikationen kann der Sicherheitssensor stationär und das zweite Objekt Teil einer Werkzeugmaschine, eines Förderbands oder eines Roboters sein, oder der Sicherheitssensor ist mobil und das erste Objekt ein Fahrzeug, ein Aufzug oder ein Roboter und das zweite Objekt Teil eines Bodens, einer Wand, einer Arbeitsfläche oder einer Schiene. Die relativ zwischen erstem und zweitem Objekt gemessenen Wege und Geschwindigkeiten lassen sich dabei selbstverständlich auf ein Referenzsystem mit bekannter Geschwindigkeit gegenüber einem der beiden Objekte umrechnen. Daher ist erfindungsgemäß sowohl möglich, Weg bzw. Geschwindigkeit eines mit dem Sensor versehen Objekts gegenüber der Umgebung zu bestimmen, als auch den Sensor auf ein gegenüber der Umgebung bewegtes Objekts zu richten und dessen Weg bzw. Geschwindigkeit zu ermitteln.

Der Sicherheitsausgang kann bevorzugt unmittelbar oder mittelbar über eine übergeordnete angeschlossene Sicherheitssteuerung auf die Gefahrenquelle einwirken. Dies hängt von der Applikation ab, beispielsweise ob der Sensor alleine mobil an einem Fahrzeug angebracht oder in eine komplexe Steuerung in einer Werkhalle integriert ist. Die Erfindung kann in beiden Fällen eingesetzt werden.

In einer bevorzugten Weiterbildung wird eine sichere Navigation ermöglicht, indem ein weiterer Sensor vorgesehen ist, der insbesondere baugleich zu dem ersten Sensor (10) oder ein Laserscanner ist. Sichere Navigation ist eine gewünschte Sicherheitsapplikation, die von herkömmlichen optischen Sensoren aber nicht geleistet wird, da etwa ein Laserscanner allein nicht häufig genug die benötigten Positionssignale erzeugen kann.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer ersten Ausführungsform des erfindungsgemäßen Sicherheitssensor und der von ihm zur Wegbestimmung aufgenommenen Oberfläche eines zweiten Objekts;
- Fig. 2a: eine schematische Frontalansicht der Oberfläche des zweiten Objekts gemäß Figur 1 zur Erläuterung des optischen Auswertungsverfahrens;
- Fig. 2b: eine beispielhafte Projektion der Intensitätsverteilung an der Oberfläche des zweiten Objekts in X-Richtung;
- Fig. 3: eine schematische Darstellung einer zweiten Ausführungsform des erfindungsgemäßen Sicherheitssensors mit zusätzlichem Beugungsgitter und der von ihm zur Wegbestimmung aufgenommenen Oberfläche eines zweiten Objekts; und
- Fig. 4: eine schematische Frontalansicht der Oberfläche des zweiten Objekts gemäß Figur 3 zur Erläuterung des Ortsfrequenzfilterverfahrens.

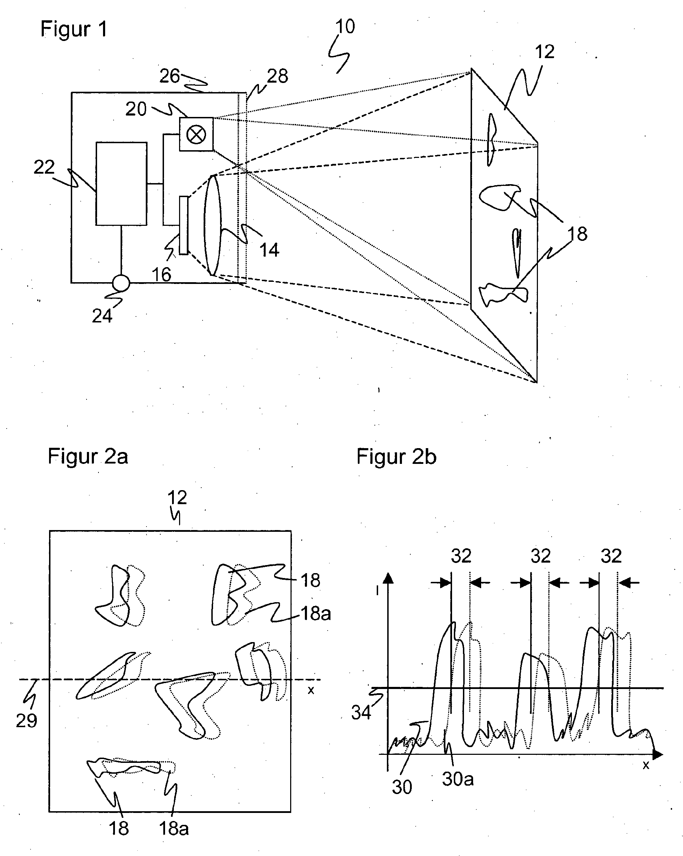

Figur 1 zeigt eine schematische Darstellung einer ersten Ausführungsform eines erfindungsgemäßen Sicherheitssensors 10. Das Licht von einem Referenzobjekt 12 trifft über eine Abbildungsoptik 14, beispielsweise eine Linse oder ein Linsensystem, auf einen Lichtempfänger 16. Anstelle der Linse kann als Abbildungsoptik 14 auch ein Prisma oder eine Prismenanordnung eingesetzt werden, die besonders FFT-basierte Auswertung (Fast Fourier Transformation) unterstützt. Dieser Lichtempfänger ist in der Lage, ein ortsaufgelöstes Abbild der Oberfläche des Referenzobjekts 12 und insbesondere von Oberflächenstrukturen 18 auf dem Referenzobjekt 12 zu erzeugen. Dazu kann ein zeilen- oder matrixförmiger CCD- oder CMOS -Chip mit einer Vielzahl von Pixeln oder Lichtempfangselementen, aber auch eine Anordnung oder Zeile von Photodioden verwendet werden.

Das Referenzobjekt 12 wird von einer aktiven Lichtquelle 20 beleuchtet. Diese Lichtquelle 20 kann eine gewöhnliche Glühbirne oder Halogenleuchte sein, wird in der Praxis aber wegen der Baugröße und der Lichtstärke bevorzugt eine Halbleiterlichtquelle sein, also eine oder eine Mehrzahl von LEDs oder Laserdioden.

Mit Lichtquelle 20 und Lichtempfänger 16 ist eine Steuerungs- und Auswertungseinheit 22 verbunden. Diese empfängt Lichtsignale des Lichtempfängers 16 und steuert die Beleuchtung des Referenzobjekts 12 über Ein- und Ausschalten sowie Leistungsaufnahme der Lichtquelle 20. In der Auswertungseinheit 22 ist außerdem das weiter unten beschriebene Verfahren zur Bestimmung von Weg- oder Geschwindigkeitssignalen implementiert.

Über einen Abschaltausgang 24 kann die Auswertungseinheit 22 ein Abschaltsignal ausgeben. Dieses Abschaltsignal wirkt entweder unmittelbar auf eine Gefahrenquelle ein (als OSSD), schaltet also eine angeschlossene Maschine ab oder bringt sie in einen sicheren Zustand. Alternativ wird das Abschaltsignal an eine nicht dargestellte übergeordnete Sicherheitssteuerung gegeben, welche ihrerseits die Gefahrenquelle absichert.

Der Sicherheitssensor 10 ist in einem Gehäuse 26 mit einer Frontscheibe 28 untergebracht. Denkbar ist auch, Auswertungseinheit 22 oder Lichtquelle 20 in einem oder mehreren separaten Gehäuse vorzusehen. Die Auswertungseinheit 22 könnte auch ganz oder teilweise in der übergeordneten Sicherheitssteuerung implementiert sein.

Figur 2a zeigt eine beispielhafte schematische Frontalansicht der Oberfläche des Referenzobjekts 12, wie sie auch den auszuwertenden Signalen des Lichtempfängers 16 entspricht. Dabei sind mit durchgezogenen Linien Strukturmerkmale 18 und mit gestrichelten Linien dieselben Strukturmerkmale 18a zu einem späteren Zeitpunkt dargestellt. Die Strukturmerkmale 18 haben sich also durch eine Relativbewegung des Sicherheitssensors 10 gegenüber dem Referenzobjekt 12 verschoben. Aus dieser Verschiebung kann der Weg, den der Sicherheitssensor 10 bezüglich des Referenzobjekts 12 zurücklegt, und mit Hilfe einer Zeitbasis auch die Geschwindigkeit berechnet werden. Für absolute Angaben kann auch der Abstand zwischen Sicherheitssensor 10 und Referenzobjekt 12 vorgegeben oder gemessen werden.

Bei den Strukturmerkmalen 18 handelt es sich um natürlicherweise vorhandene optische Unebenheiten, etwa die natürliche Textur des Bodens oder einer Wand. Eine natürliche Rauheit kann durch schräge Montage des Sicherheitssensors 10 oder schräge Beleuchtung durch die Lichtquelle 16 optisch verstärkt werden. In einer alternativen Ausführungsform ist auch denkbar, die Strukturmerkmale 18 gezielt zu verstärken, indem das Referenzobjekt 12 mit einem grobkörnigen Anstrich, Farbmerkmalen oder einem Muster, auch einer Kodierung oder einem Barcode, versehen wird. Auch durch Verwendung einer Optik 14 mit hoher Auflösung kann die vorhandene feinere Struktur besser ausgenutzt und damit Geschwindigkeiten von 4 m/s und darüber hinaus gemessen werden.

Figur 2b illustriert die Intensitätsverteilung I für eine Projektion in X-Richtung entlang der gestrichelten Linie 29 der Figur 2a. Dabei entspricht die durchgezogene Funktion 30 der durch Strukturmerkmale 18 zu einem Zeitpunkt aufgeprägten Intensität, die gestrichelte Funktion 30a dagegen der durch Strukturmerkmale 18a zu einem späteren Zeitpunkt aufgeprägten Intensität. Die Relativbewegung in X-Richtung entspricht dem Versatz 32 der beiden Funktionen 30, 30a gegeneinander. Die Auswertung ist selbstverständlich nicht auf die X-Richtung beschränkt, dies dient nur der vereinfachten Darstellung; die Intensität kann vielmehr als volle zweidimensionale Funktion ausgewertet werden.

Um den Versatz der Strukturmerkmale 18 gegenüber den Strukturmerkmalen 18a zu bestimmen, sind in der Auswertungseinheit 22 optische Korrelationsverfahren oder Bildkorrelationsverfahren implementiert. In den beiden zu verschiedenen Zeiten aufgenommenen unterschiedlichen Bildern werden also die Strukturmerkmale 18 nachverfolgt und im späteren Bild mit den Strukturmerkmalen 18a identifiziert. Anhand der bekannten Pixelgröße des Lichtempfängers 16 kann die Auswertungseinheit 22 die Bewegung in X- und Y-Richtung ermitteln. Geeignete mathematische Verfahren für die Bestimmung der Korrelation sind grundsätzlich bekannt, beispielsweise eine Kreuzkorrelation oder auf Fourieranalyse basierende Verfahren. Eine andere Möglichkeit ist, aus mehreren Abbildungen den optischen Fluss zu schätzen, welcher neben Variationen durch veränderliches Umgebungslicht, geänderte Reflexionswinkel, Abschattungen und ähnliche Störeffekte eine wesentliche durch die Relativbewegung erzeugte Komponente der zeitlichen Abhängigkeit enthält.

Für sicherheitstechnische Anwendungen bestimmt die Auswertungseinheit 22 nicht nur in der beschriebenen Weise den Versatz und daraus den Weg und die Geschwindigkeit, sondern bewertet zugleich, wie genau diese Auswertung ist. Genügt diese Bewertung vorgegebenen Sicherheitsanforderungen nicht, so wird über den Abschaltausgang 24 ein Abschaltsignal ausgegeben, um Gefahren auszuschließen, welche durch die nicht hinreichend bekannte Relativbewegung entstehen. Eine solche Abschaltung erfolgt auch dann, wenn die Güte der Auswertung als hinreichend betrachtet wird, das Weg- oder Geschwindigkeitssignal aber anzeigt, dass ein mit dem Sicherheitssensor 10 verbundenes Objekt oder das Referenzobjekt 12 einen Schutzbereich verletzt oder eine zu hohe Geschwindigkeit erreicht hat, ebenso im Falle eines Kurzschlusses oder einer anderen Störung. Die Grenzgeschwindigkeiten können von einer Absolutposition abhängen, welche ständig über eine Anfangsreferenz aus dem Weg signal verfügbar gemacht werden kann, und sie können der Auswertungseinheit 22 von einem Benutzer über Bedienelemente am Sicherheitssensor 10 oder über eine Datenschnittstelle per Computer oder dergleichen vorgegeben werden.

Einen denkbaren Anteil für die Bewertung bzw. ein Gütemaß liefern bereits die meisten der beschriebenen mathematischen Auswertungsverfahren, etwa in Form eines Korrelationskoeffizienten. Ein wichtiges weiteres Merkmal ist, ob das Referenzobjekt 12 überhaupt genügend Struktur aufweist, also genügend stark ausgeprägte Strukturmerkmale 18. Die Struktur kann, wie in Figur 2b dargestellt, durch eine Schwellbewertung der Intensitätsfunktion mit einer Schwelle 34 untersucht werden. Auf diese Weise werden Minima oder Maxima der Intensitätsfunktion identifiziert. Man kann nun verschiedene Forderungen stellen: es müssen überhaupt genügend Extrema, also erkennbare Strukturmerkmale 18 vorhanden sein, die Extrema und demnach die Strukturmerkmale 18 müssen eine gewisse Streuung aufweisen, also repräsentativ sein, oder die Ausprägung der Extrema muss mit einem aufwändigeren Verfahren als allein mit einer Schwelle geprüft werden, um sie von Rauschen oder Störeffekten zu unterscheiden.

Die Güte kann einige oder alle diese und weitere Faktoren mit unterschiedlicher Gewichtung berücksichtigen, um zu entscheiden, ob das ausgegebene Weg- und Geschwindigkeitssignal zuverlässig wäre und ob insbesondere genügend Struktur des Referenzobjekts 12 aufgelöst werden kann. Ein besonderer Grund für fehlende Struktur kann auch in einer Fehlfunktion, einem Ausfall, einer falschen Justage oder Montage des Lichtempfängers 16 liegen. Indem in all diesen Fällen gegebenenfalls abgeschaltet wird, kann eine Gefährdung von Bedienpersonal durch unzuverlässige Messdaten sicher ausgeschlossen werden. Dabei kann je nach geforderter Sicherheitsstufe der Sicherheitssensor 10 einige oder alle Abschaltkriterien für eine Zeitspanne maximal bis hin zur Ansprechzeit noch tolerieren, so dass eine unnötige Abschaltung vermieden wird, etwa wenn nur ganz kurzzeitig unterhalb der Ansprechzeit die Struktur des Referenzobjekts 12 nicht ausreicht, danach aber sofort wieder genügend Struktur vorhanden ist.

Damit der Sicherheitssensor 10 noch zuverlässiger wird, kann die Hardware einschließlich der Auswertungseinheit 22 und des Abschaltausgang 24 sicher ausgeführt sein, insbesondere zweikanalig. Hinsichtlich der Auswertungseinheit 22 ist sowohl denkbar, mehrere gleiche, also redundante Auswertungsbausteine vorzusehen, als auch unterschiedliche diversitäre Hardware aus der Gruppe von Mikroprozessoren, ASICs (Application Specific Integrated Circuit), FPGAs (Field Programmable Gateway Array), PLDs (Programmable Logic Device), DSPs (Digital Signal Processor) zu wählen. Schließlich können mehrere Auswertungsverfahren parallel implementiert werden, beispielsweise eine optische Korrelation einerseits und eine Auswertung des optischen Flusses andererseits. Entstehen zu große Diskrepanzen der beiden Auswertungsverfahren, so wird abgeschaltet.

Neben dem Abschaltsignal durch den Abschaltausgang 24 kann der Sicherheitssensor auch mit weiteren Ausgängen verbunden sein, über welche nicht nur das Weg- und Geschwindigkeitssignal, sondern auch sonstige Messdaten, rohe oder vorverarbeitete Signale oder Bilder des Lichtempfängers 16 oder die Bewertung der Güte samt allen Vorverarbeitungsstufen etwa zu Diagnosezwecken ausgegeben wird. Auch diese weiteren Ausgänge sind bevorzugt sicher ausgelegt, insbesondere zweikanalig.

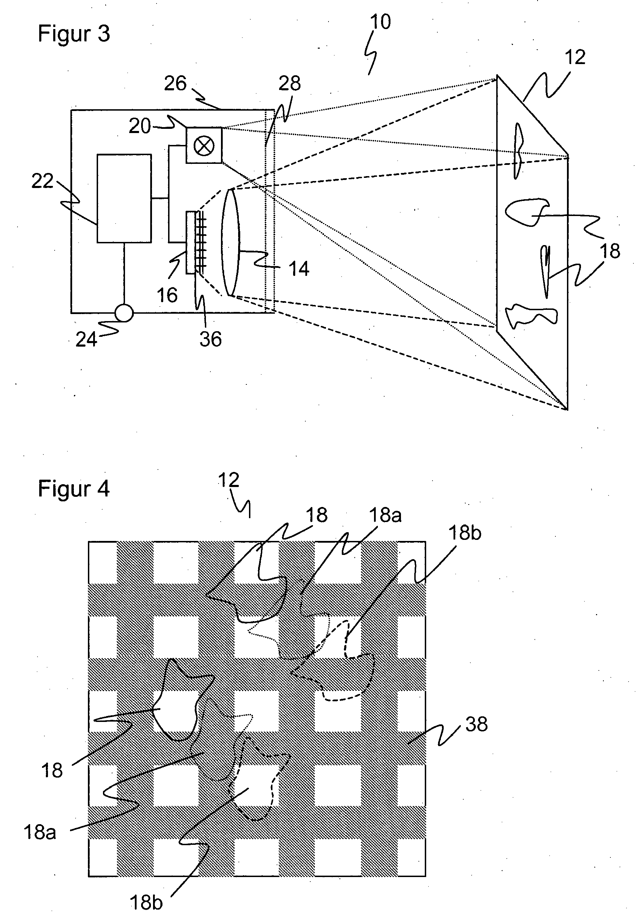

Figur 3 zeigt eine weitere Ausführungsform des Sicherheitssensors 10, wobei hier wie überall in der Beschreibungen gleiche Bezugszeichen gleiche Merkmale bezeichnen. Diese Ausführungsform unterscheidet sich durch eine besondere Implementierung der optischen Korrelation in der Auswertungseinheit 22, welche zusätzlich oder alternativ zu den bisher vorgestellten Auswertungsverfahren angewandt wird. Dem Lichtempfänger 16 ist für die Bestimmung der optischen Korrelation mittels eines Ortsfrequenzfilterverfahrens ein optisches Gitter 36 vorgeschaltet. Anstelle eines Gitters 36 sind andere Elemente vorstellbar, welche der Abbildung des Referenzobjekt 12 eine Grundstruktur aufprägen. Weiterhin ist denkbar, diese Grundstruktur nicht optisch, sondern erst dem Signal des Lichtempfängers 16 oder den Bilddaten in der Auswertungseinheit 22 rechnerisch aufzuprägen. Dabei wird also das Gitter durch die gleichmäßige Pixelstruktur des Lichtempfängers 16 und durch eine positive und negative Gewichtung der Helligkeit der einzelnen Pixel erzeugt.

Figur 4 zeigt schematisch eine Frontalansicht der Oberfläche des Referenzobjekt 12, wie sie von dem Lichtempfänger 16 durch das Gitter 36 aufgenommen wird. Dabei ist die Grundstruktur 36 aus grauen Gitterbalken vereinfacht dargestellt, in der Realität könnte hier ein Beugungsmuster entstehen. Das bewegte Bild des Referenzobjekts 12 ist somit mit einer Gitterstruktur überlagert, wodurch man ein periodisches Ausgangssignal des Lichtempfängers 16 erhält, dessen Frequenz wiederum der Geschwindigkeit proportional ist. Dies wird sofort verständlich, wenn man mit durchgezogenen Linien dargestellte Strukturmerkmale 18 in der Zeit verfolgt, die sich zunächst an die mit gepunkteten Linien dargestellten Positionen 18a und zu einem noch späteren Zeitpunkt an die mit gestrichelten in dargestellten Positionen 18b verschieben. Die Strukturen 18 werden dabei periodisch von dem Gittermuster 38 verdeckt.

Veranschaulichen lässt sich dies auch durch ein von dem dargestellten Sicherheitssensor 10 völlig unabhängiges einfaches Modell: bei Sonnenschein entstehen auf einer Allee mit Bäumen am Straßenrand abwechselnd Hell-Dunkel-Zonen. Fahrzeuge, die sich auf dieser Straße bewegen, reflektieren mal mehr und mal weniger Licht, je nachdem, ob sie gerade durch einen Sonnen- oder einen Schattenabschnitt fahren. Je schneller sie sich bewegen, desto kürzer werden die Intervalle, in denen sie im Sonnenschein "aufblitzen".

Möchte man zur Diversifizierung das soeben beschriebene Ortsfrequenzfilterverfahren neben einem anderen der weiter oben beschriebenen optischen Korrelationsverfahren oder einem auf dem optischen Fluss basierenden Modell verwenden, so ist es vorteilhaft, wenn die Auswertungseinheit 22 in der Lage ist, die durch das Gitter aufgeprägte Grundstruktur herauszurechnen.

Der Sicherheitssensor 10 kann in einer ganzen Reihe verschiedener Applikationen eingesetzt werden. In einigen dieser Applikationen ist der Sicherheitssensor 10 stationär, also beispielsweise am Boden, einer Arbeitsfläche oder fest an einer Maschine montiert, und beobachtet als Referenzobjekt 12 einen Bereich, durch den sich Objekte bewegen, deren Geschwindigkeit sicher bestimmt werden soll. Das könnte eine Fertigungsstraße, ein Förderband, ein Fahrzeug oder ein Roboter sein. Umgekehrt ist auch denkbar, dass der Sicherheitssensor 10 mobil an einem Fahrzeug, einem beweglichen Maschinenteil, einem Roboter oder einem Aufzug montiert ist und anhand des Bodens, einer Wand oder anderer Objekte seine eigene Bewegung als Weg und Geschwindigkeit verfolgt.

Besonders bei den mobilen Anwendungen ist denkbar, im Sicherheitssensor 10 zu Beginn und/oder in regelmäßigen Intervallen eine Absolutposition vorzugeben, wobei der Sicherheitssensor 10 Veränderungen seiner Position anhand des Wegsignals verfolgt. Unterstützend und zur weiteren Erhöhung der Sicherheit können zwei baugleiche Sicherheitssensoren 10 oder ein Sicherheitssensor 10 kombiniert mit beispielsweise einem Laserscanner verwendet werden. Auf diese Weise ist eine autonome, sichere Navigation möglich.

## Patentansprüche

1. Optoelektronischer Sicherheitssensor (10) zur berührungslosen Messung von Wegen und/oder Geschwindigkeiten eines mit dem Sicherheitssensor (10) lagefest verbundenen ersten Objekts gegenüber einem relativ zu dem ersten Objekt bewegten zweiten Objekt (12), wobei die Objekte bei Bewegung eine potentielle Gefahrenquelle bilden und wobei der Sicherheitssensor (10) eine Lichtquelle (20), einen Lichtempfänger (16) mit einer Vielzahl von Lichtempfangselementen sowie eine Auswertungseinheit (22) aufweist, die dafür ausgebildet ist, aus mindestens zwei nacheinander von dem Lichtempfänger (16) aufgenommenen Abbildungen einer Oberflächenstruktur (18, 18a, 18b) des zweiten Objekts (12) den Weg und/oder die Geschwindigkeit mittels eines optischen Korrelationsverfahrens und/oder durch Auswertung des optischen Flusses zu bestimmen,
**dadurch gekennzeichnet,**
**dass** die Auswertungseinheit (22) weiter dafür ausgebildet ist, die Güte des ermittelten Weges und/oder der ermittelten Geschwindigkeit zu bewerten, um zu erkennen, wenn keine zuverlässige Weg- oder Geschwindigkeitsbestimmung möglich ist, und dass ein Sicherheitsausgang (24) vorgesehen ist, über welchen die Auswertungseinheit (22) ein Abschalt- oder Abbremssignal ausgeben kann, um bei Unterschreitung einer geforderten Güte die Gefahrenquelle abzusichern.

2. Sicherheitssensor (10) nach Anspruch 1,
wobei die Auswertungseinheit (22) dafür ausgebildet ist, bei der Bewertung der Güte die Abbildung des zweiten Objekts (12) auf ausreichende Struktur (18, 18a, 18b) zu überprüfen, insbesondere ob eine ausreichende räumliche Intensitätsänderung über die Vielzahl von Lichtempfangselementen (16) vorhanden ist.

3. Sicherheitssensor (10) nach Anspruch 2,
wobei die Auswertungseinheit (10) dafür ausgebildet ist, für ausreichende Struktur (18, 18a, 18b) ein Zuverlässigkeitsmaß zu berechnen, welches die Anzahl der Extrema der Intensität, die Ausprägung der Extrema und/oder die Streuung der räumlichen Lage und Verteilung der Extrema berücksichtigt.

4. Sicherheitssensor (10) nach einem der vorhergehenden Ansprüche,
wobei die Auswertungseinheit (22) dafür ausgebildet ist, ein maximales Zeitintervall zu definieren, innerhalb dessen die Güte oder Teilkriterien der Güte als nicht ausreichend bewertet werden können, ohne ein Abschalt- oder Abbremssignal auszugeben.

5. Sicherheitssensor (10) nach einem der vorhergehenden Ansprüche,
wobei dem Lichtempfänger (16) ein optisches Element (36) vorgeschaltet ist, weiches der Abbildung eine regelmäßige Grundstruktur (38) aufzwingt, insbesondere ein optisches Gitter, und/oder wobei die Auswertungseinheit (22) oder der Lichtempfänger (16) dafür ausgebildet ist, die regelmäßige Grundstruktur (38) virtuell durch Verringerung und/oder Erhöhung des Helligkeitssignals ausgewählter Lichtempfangselemente zu erzeugen und/oder wobei die Auswertungseinheit (22) dafür ausgebildet ist, die regelmäßige Grundstruktur (38) als Referenzsignal bei der Bewertung der Struktur (18, 18a, 18b) des zweiten Objekts (12) zu berücksichtigen.

6. Sicherheitssensor (10) nach einem der vorhergehenden Ansprüche,
wobei der Sicherheitsausgang (24) zweikanalig ausgebildet ist und/oder wobei mindestens eine zweite redundante Auswertungseinheit vorgesehen ist und/oder wobei mehrere insbesondere unterschiedliche Auswertungsverfahren zur Bestimmung der Güte, des Wegs und/oder der Geschwindigkeit in der Auswertungseinheit (22) oder den Auswertungseinheiten implementiert sind.

7. Sicherheitssensor (10) nach einem der vorhergehenden Ansprüche,
wobei das zweite Objekt (12) eine verstärkte optische Struktur (18, 18a, 18b) aufweist, insbesondere durch grobkörnigen Anstrich, verschiedenfarbige Pigmente und/oder Muster.

8. Sicherheitssensor (10) nach einem der vorhergehenden Ansprüche,
wobei die Auswertungseinheit (22) dafür ausgebildet ist, aus dem Weg und/oder der Geschwindigkeit mittels einer Anfangsreferenz eine Absolutposition des Sicherheitssensors (10), des ersten und/oder des zweiten Objekts (12) zu berechnen, Geschwindigkeit und/oder Absolutposition von erstem und/oder zweitem Objekt (12) zu überwachen und das Abschalt- oder Abbremssignal zu auszugeben, wenn bestimmte Absolutpositionen erreicht oder bestimmte Geschwindigkeiten oder bestimmte Geschwindigkeiten an bestimmten Absolutpositionen überschritten werden.

9. Sicherheitssensor (10) nach einem der vorhergehenden Ansprüche,
wobei der Sicherheitssensor (10) stationär und das zweite Objekt (12) Teil einer Werkzeugmaschine, eines Förderbands oder eines Roboters ist und/oder wobei der Sicherheitssensor (10) mobil und das erste Objekt ein Fahrzeug, ein Aufzug oder ein Roboter und das zweite Objekt (12) Teil eines Bodens, einer Wand, einer Arbeitsfläche oder einer Schiene ist.

10. Sicherheitssensor (10) nach einem der vorhergehenden Ansprüche,
wobei der Sicherheitsausgang (24) unmittelbar oder mittelbar über eine übergeordnete angeschlossene Sicherheitssteuerung auf die Gefahrenquelle einwirkt.

11. Sicherheitssensor (10) nach einem der vorhergehenden Ansprüche,
wobei ein weiterer Sensor vorgesehen ist, der insbesondere baugleich zu dem ersten Sensor (10) oder ein Laserscanner ist, um eine sichere Navigation des ersten und/oder des zweiten Objekts (12) zu ermöglichen.

12. Sicherheitsverfahren zur optischen berührungslosen Messung von Wegen und/oder Geschwindigkeite eines mit einem Sicherheitssensor (10) lagefest verbundenen ersten Objekts gegenüber einem relativ zu dem ersten Objekt bewegten zweiten Objekts (12), wobei die Objekte bei Bewegung eine potentielle Gefahrenquelle bilden, wobei das zweite Objekt (12) mit einer Lichtquelle (18) des Sicherheitssensors beleuchtet, die Oberflächenstruktur des zweiten Objekts (12) auf einem Lichtempfänger (16) des Sicherheitssensors mit einer Vielzahl von Lichtempfangselementen abgebildet und der Weg und/oder die Geschwindigkeit mittels eines optischen Korrelationsverfahrens oder durch Auswertung des optischen Flusses bestimmt wird,
**dadurch gekennzeichnet,**
**dass** die Güte des ermittelten Weges und/oder der ermittelten Geschwindigkeit bewertet wird um zu erkennen, wenn keine zuverlässige Weg- oder Geschwindigkeitsbestimmung möglich ist, und dass über einen Sicherheitsausgang (24) ein Abschalt- oder Abbremssignal zur Absicherung der Gefahrenquelle ausgegeben wird, wenn eine geforderte Güte unterschritten wird.

13. Sicherheitsverfahren nach Anspruch 12,
wobei bei der Bewertung der Güte die Abbildung des zweiten Objekts (12) auf ausreichende Struktur (18, 18a, 18b) überprüft wird, insbesondere ob eine ausreichende räumliche Intensitätsänderung über die Vielzahl von Lichtempfängern vorhanden ist, wobei insbesondere für ausreichende Struktur (18, 18a, 18b) ein Zuverlässigkeitsmaß berechnet wird, welches die Anzahl der Extrema der Intensität und/oder die Streuung der räumlichen Lage und Verteilung der Extrema berücksichtigt.

14. Sicherheitsverfahren nach Anspruch 12 oder 13,
wobei der Abbildung eine regelmäßige Grundstruktur (38) aufgezwungen wird, insbesondere durch ein dem Lichtempfänger (16) vorgeschaltetes optisches Gitter (36), und/oder wobei die regelmäßige Grundstruktur (38) virtuell durch Verringerung und/oder Erhöhung des Helligkeitssignals ausgewählter Lichtempfangselemente (16) erzeugt wird und/oder wobei die regelmäßige Grundstruktur (38) als Referenzsignal bei der Bewertung der Struktur (18, 18a, 18b) des zweiten Objekts berücksichtigt wird.

15. Sicherheitsverfahren nach einem der Ansprüche 12 bis 14,
wobei aufgrund der Bestimmung von Weg und/oder Geschwindigkeit unter Berücksichtigung einer Anfangs- oder Zwischenposition eine Absolutposition des Sicherheitssensors (10), des ersten und/oder des zweiten Objekts (12) bestimmt wird und/oder mittels zweifacher insbesondere diversitär-redundanter Bestimmung von Weg und/oder Geschwindigkeit eine sichere Navigation des ersten und/oder des zweiten Objekts (12) ermöglicht wird.

## Claims

1. An optoelectronic safety sensor (10) for the contactless measurement of paths and/or speeds of a first object connected in a fixed position to the safety sensor (10) with respect to a second object (12) moved relative to the first object, wherein the objects form a potential source of danger on movement, and wherein the optoelectronic safety sensor (10) comprises a light source (20), a light receiver (16) having a plurality of light reception elements, and an evaluation unit (22) configured to determine the path and/or speed from at least two images of a surface structure (18, 18a, 18b) of the second object (12) taken sequentially by the light receiver (16) using an optical correlation process and/or an evaluation of the optical flow,
**characterized in that**
the evaluation unit (22) is further configured to evaluate a quality of the determined path and/or determined speed to detect when no reliable determination of a path or speed is possible, and **in that** a safety output (24) is provided via which the evaluation unit (22) can output a shutdown signal or brake signal to secure the source of danger when the quality falls below a required quality.

2. Safety sensor (10) in accordance with claim 1,
wherein the evaluation unit (22) is configured to check the image of the second object (12) for sufficient structure (18, 18a, 18b) when evaluating the quality, in particular whether a sufficient spatial change of intensity is present over the plurality of light reception elements (16).

3. Safety sensor (10) in accordance with claim 2,
wherein the evaluation unit (22) is configured to calculate a reliability measure for sufficient structure (18, 18a, 18b) which takes account of a number of extremes of intensity, an extent of the extremes and/or a scattering of spatial position and distribution of the extremes.

4. Safety sensor (10) in accordance with one of the preceding claims,
wherein the evaluation unit (22) is configured to define a maximum time interval within which the quality or part criteria of the quality can be evaluated as insufficient without outputting a shutdown signal or brake signal.

5. Safety sensor (10) in accordance with one of the preceding claims,
wherein an optical element (36) is arranged in front of the light receiver (16) and is configured to impose a regular base structure (38) on the image, in particular an optical grid, and/or wherein the evaluation unit (22) or the light receiver (16) is configured to generate the regular base structure (38) virtually by decreasing and/or increasing the brightness signal of selected light reception elements, and/or wherein the evaluation unit (22) is configured to take account of the regular base structure (38) as a reference signal in an evaluation of the structure (18, 18a, 18b) of the second object (12).

6. Safety sensor (10) in accordance with one of the preceding claims,
wherein the safety output (24) is configured with two channels and/or wherein at least a second redundant evaluation unit is provided and/or wherein multiple, in particular diversified evaluation methods for determining the quality, the path and/or the speed are implemented in the evaluation unit (22) or the evaluation units.

7. Safety sensor (10) in accordance with one of the preceding claims,
wherein the second object (12) has an amplified optical structure (18, 18a, 18b), in particular by a coarse grained painting, differently coloured pigments, and/or patterns.

8. Safety sensor (10) in accordance with one of the preceding claims,
wherein the evaluation unit (22) is configured to calculate an absolute position of the safety sensor (10), the first and/or the second object (12) from the path and/or speed based on an initial reference, to monitor speed and/or absolute position of the first and/or second object (12) and to output the shutdown or brake signal when specified absolute positions are reached or specified speeds or specified speeds at specified absolute positions are exceeded.

9. Safety sensor (10) in accordance with one of the preceding claims,
wherein the safety sensor (10) is stationary and the second object (12) is part of a machine tool, a conveyor belt, or a robot and/or wherein the safety sensor (10) is mobile and the first object is a vehicle, an elevator or a robot and the second object (12) is part of a floor, a wall, a working surface or a rail.

10. Safety sensor (10) in accordance with one of the preceding claims,
wherein the safety output (24) acts directly or indirectly via a connected higher level safety control on the danger source.

11. Safety sensor (10) in accordance with one of the preceding claims, further comprising an additional sensor which is in particular of the same construction as the first sensor (10) or a laser scanner to enable a safe navigation of the first and/or the second object (12).

12. A safety method for the optical contactless measurement of paths and/or speeds of a first object connected in a fixed position to the safety sensor (10) with respect to a second object (12) moved relative to the first object, wherein the objects form a potential source of danger on movement, wherein the second object (12) is illuminated by a light source (18) of the safety sensor (10), the surface structure of the second object (12) is imaged on a light receiver (16) of the safety sensor (10) having a plurality of light reception elements, and the path and/or speed is determined using an optical correlation process or an evaluation of the optical flow,
**characterized in that**
the quality of the determined path and/or the determined speed is determined to detect when no reliable determination of path and/or speed is possible, and **in that** a shutdown signal or brake signal is output via a safety output (24) to secure the source of danger when the quality falls below a required quality.

13. Safety method in accordance with claim 12,
wherein the image of the second object (12) is checked for sufficient structure (18, 18a, 18b) when evaluating the quality, in particular whether a sufficient spatial intensity change is present over the plurality of light receivers, wherein in particular a reliability measure is determined for sufficient structure (18, 18a, 18b) which takes account of the number of extremes of intensity and/or the scattering of the spatial position and distribution of extremes.

14. Safety method in accordance with claims 12 or 13,
wherein a regular base structure (38) is imposed on the image, in particular by an optical grating (36) arranged in front of the light receiver (16), and/or wherein the regular base structure (38) is generated virtually by decreasing and/or increasing a brightness signal of selected light reception elements (16), and/or wherein the regular base structure (38) is taken into account as a reference signal in the evaluation of the structure (18, 18a, 18b) of the second object.

15. Safety method in accordance with on of claims 12 to 14,
wherein an absolute position of the safety sensor (10), the first and/or the second object (12) is determined based on the determination of path and/or speed taking account of an initial or intermediate position and/or wherein by twofold, in particular diversified-redundant determination of path and/or speed a safe navigation of the first and/or second object (12) is enabled.

## Revendications

1. Capteur de sécurité optoélectronique (10) pour la mesure sans contact de trajets et/ou de vitesses d'un premier objet relié solidairement en position au capteur de sécurité (10) par rapport à un second objet (12) déplacé par rapport au premier objet, lesdits objets formant en déplacement une source de danger potentielle et le capteur de sécurité (10) comprend une source de lumière (20), un récepteur de lumière (16) et une pluralité d'éléments récepteurs de lumière, ainsi qu'une unité d'évaluation (22) qui est réalisée pour déterminer, à partir d'au moins deux images, prises les unes après les autres par le récepteur de lumière (16), d'une structure de surface (18, 18a, 18b) du second objet (12), le trajet et/ou la vitesse au moyen d'un procédé de corrélation optique et/ou par évaluation du flux optique,
**caractérisé en ce que**
l'unité d'évaluation (22) est en outre réalisée pour évaluer la qualité du trajet déterminé et/ou de la vitesse déterminée, pour reconnaître si une détermination fiable du trajet ou de la vitesse est possible, et **en ce qu'**il est prévu une sortie de sécurité (24) via laquelle l'unité d'évaluation (22) peut délivrer un signal de coupure ou de freinage, afin de sécuriser la source de danger si est une qualité requise n'est pas atteinte.

2. Capteur de sécurité (10) selon la revendication 1,
dans lequel l'unité d'évaluation (22) est réalisée pour vérifier, lors de l'évaluation de la qualité, si l'image du second objet (12) présente une structure suffisante (18, 18a, 18b), en particulier s'il existe une modification d'intensité spatiale suffisante sur la pluralité d'éléments récepteurs de lumière (16).

3. Capteur de sécurité (10) selon la revendication 2,
dans lequel l'unité d'évaluation (10) est réalisée, en cas de structure suffisante (18, 18a, 18b), pour calculer un degré de fiabilité, qui tient compte du nombre des valeurs extrêmes de l'intensité, du caractère marqué des valeurs extrêmes et/ou de la dispersion de la position spatiale et de la répartition des valeurs extrêmes.

4. Capteur de sécurité (10) selon l'une des revendications précédentes, dans lequel l'unité évaluation (22) est réalisée pour définir un intervalle temporel maximum à l'intérieur duquel la qualité ou des critères partiels concernant la qualité peuvent être évalué(e)s comme non suffisant(e)s sans délivrer un signal de coupure ou de freinage.

5. Capteur de sécurité (10) selon l'une des revendications précédentes, dans lequel un élément optique (36) est prévu devant le récepteur de lumière (16), lequel impose à l'image une structure de base régulière (38), en particulier une grille optique, et/ou dans lequel l'unité d'évaluation (22) ou le récepteur de lumière (16) est réalisé(e) pour engendrer de manière virtuelle la structure de base régulière (38) par réduction et/ou augmentation du signal de luminosité d'éléments récepteurs de lumière choisis, et/ou dans lequel l'unité d'évaluation (22) est réalisée pour tenir compte de la structure de base régulière (38) à titre de signal de référence lors de l'évaluation de la structure (18, 18a, 18b) du second objet (12).

6. Capteur de sécurité (10) selon l'une des revendications précédentes, dans lequel la sortie de sécurité (24) est réalisée à deux canaux, et/ou dans lequel il est prévu au moins une seconde unité d'évaluation redondante, et/ou dans lequel sont mis en oeuvre plusieurs procédés d'évaluation, en particulier différents, pour la détermination de la qualité, du trajet et/ou de la vitesse, dans l'unité évaluation (22) ou les unités d'évaluation.

7. Capteur de sécurité (10) selon l'une des revendications précédentes, dans lequel le second objet (12) présente une structure optique renforcée (18, 18a, 18b), en particulier par un revêtement à particules grossières, des pigments de différentes couleurs et/ou des motifs différents.

8. Capteur de sécurité (10) selon l'une des revendications précédentes, dans lequel l'unité d'évaluation (22) est réalisée pour calculer, à partir du trajet et/ou de la vitesse et au moyen d'une référence de départ, une position absolue du capteur de sécurité (10), du premier et/ou du second objet (12), pour surveiller la vitesse et/ou la position absolue du premier et/ou du second objet (12), et pour délivrer le signal de coupure ou de freinage si des positions absolues déterminées sont atteintes ou si des vitesses déterminées sont dépassées ou encore si des vitesses déterminées sont dépassées à des positions absolues déterminées.

9. Capteur de sécurité (10) selon l'une des revendications précédentes, dans lequel le capteur de sécurité (10) est stationnaire et le second objet (12) fait partie d'une machine-outil, d'une bande de convoyage ou d'un robot et/ou dans lequel le capteur de sécurité (10) est mobile et le premier objet est un véhicule, un ascenseur ou un robot et le second objet (12) fait partie d'un sol, d'un mur, d'une surface de travail ou d'un rail.

10. Capteur de sécurité (10) selon l'une des revendications précédentes, dans lequel la sortie de sécurité (24) agit sur la source de danger soit directement soit indirectement via une commande de sécurité maître branchée.

11. Capteur de sécurité (10) selon l'une des revendications précédentes, dans lequel il est prévu un autre capteur qui est en particulier de même structure que le premier capteur (10) ou qui est un scanneur à laser, afin de permettre une navigation en sécurité du premier et/ou du second objet (12).

12. Procédé de sécurité et pour la mesure optique sans contact de trajets et/ou de vitesses d'un premier objet relié solidairement en position à un capteur de sécurité (10) par rapport à un second objet (12) déplacé par rapport au premier objet, dans lequel les objets forment en cas de déplacement une source de danger potentielle, dans lequel le second objet (12) est éclairé avec une source de lumière (18) du capteur de sécurité, la structure de surface du second objet (12) est imagée sur un récepteur de lumière (16) du capteur de sécurité avec une pluralité d'éléments récepteurs de lumière, et le trajet et/ou la vitesse est déterminé(e) au moyen d'un procédé de corrélation optique ou par évaluation du flux optique,
**caractérisé en ce que** l'on évalue la qualité du trajet déterminé et/ou de la vitesse déterminée pour reconnaître lorsqu'il n'est pas possible de procéder à une détermination fiable du trajet ou de la vitesse, et **en ce que** l'on délivre via une sortie de sécurité (24) un signal de coupure ou de freinage pour sécuriser la source de danger lorsqu'une qualité requise n'est pas atteinte.

13. Procédé de sécurité selon la revendication 12,
dans lequel lors de l'évaluation de la qualité, on vérifie si l'image du second objet (12) présente une structure suffisante (18, 18a, 18b), en particulier s'il existe une variation d'intensité spatiale suffisante sur la pluralité de récepteurs de lumière, et en particulier si la structure (18, 18a, 18b) est suffisante, on calcule un degré de fiabilité qui tient compte du nombre des valeurs extrêmes de l'intensité et/ou de la dispersion de la position spatiale et de la répartition des valeurs extrêmes.

14. Procédé de sécurité selon la revendication 12 ou 13,
dans lequel une structure de base régulière (38) est imposée à l'image, en particulier par une grille optique (36) disposée devant le récepteur de lumière (16), et/ou dans lequel la structure de base régulière (38) est engendrée virtuellement par réduction et/ou augmentation du signal de luminosité d'éléments récepteurs de lumière choisis (16), et/ou dans lequel la structure de base régulière (38) est prise en compte à titre de signal de référence lors de l'évaluation de la structure (18, 18a, 18b) du second objet.

15. Procédé de sécurité selon l'une des revendications 12 à 14,
dans lequel on détermine, en se basant sur la détermination du trajet et/ou de la vitesse et en tenant compte d'une position de départ ou d'une position intermédiaire, une position absolue du capteur de sécurité (10), du premier et/ou du second objet (12), et/ou on rend possible une navigation en sécurité du premier et/ou du second objet (12) au moyen d'une détermination double, en particulier diversitaire-redondante, du trajet et/ou de la vitesse.
